# EUROPÄISCHE PATENTSCHRIFT

(11) **EP 2 542 447 B1**
(45) Veröffentlichungstag und Bekanntmachung des Hinweises auf die Patenterteilung: **04.12.2019**
(21) Anmeldenummer: 11702920.7
(22) Anmeldetag: 12.01.2011
(51) Int. Cl.: B60N 2/847

(54) **KOPFSTÜTZE, INSBESONDERE FÜR EIN KRAFTFAHRZEUG**
HEAD RESTRAINT, IN PARTICULAR FOR A MOTOR VEHICLE
APPUIE-TÊTE, NOTAMMENT POUR UN VÉHICULE À MOTEUR

(30) Priorität: 05.03.2010 DE 102010010537
(43) Veröffentlichungstag der Anmeldung: 09.01.2013
(73) Patentinhaber: Adient Luxembourg Holding S.à r.l., 1855 Luxembourg (LU)
(72) Erfinder: GÜNTHER, Benjamin, 42699 Solingen (DE); STEIN, Alexander, 51375 Leverkusen (DE)
(74) Vertreter: Schwöbel, Thilo K.
(86) Internationale Anmeldenummer: PCT/EP2011/000093
(87) Internationale Veröffentlichungsnummer: WO 2011/107182

(56) Entgegenhaltungen:
- EP-A1- 1 764 261
- FR-A1- 2 564 045
- FR-A1- 2 747 349
- GB-A- 2 336 304
- US-A1- 2008 030 061

## Beschreibung

Die Erfindung betrifft eine Kopfstütze, insbesondere für ein Kraftfahrzeug.

Aus der Druckschrift WO 2005/097545 A2 ist eine Kopfstütze für einen Fahrzeugsitz bekannt, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist. Ähnliche Kopfstützen sind auch aus den Druckschriften DE 100 47 406 A1, DE 10 2006 046 975 A1, EP 1 491 394 A1 und EP 1 764 261 A1 bekannt.

Ferner ist aus der Druckschrift DE 102 02 598 A1 eine Kopfstütze für einen Fahrzeugsitz bekannt, bei der eine Komforteinstellungsmöglichkeit realisiert ist.

Oftmals ist für die Betätigung der Komfortverstellung bzw. die Veränderung der Komfortverstellungseinrichtung die Betätigung eines Bedienelements, wie beispielsweise eines Druckknopfes oder dergleichen erforderlich, was im Verkehrsgeschehen zu einer geringeren Sicherheit führt und ferner auch eine Komforteinbuße zur Folge hat.

Der Erfindung liegt daher die Aufgabe zugrunde, eine Kopfstütze für einen Fahrzeugsitz mit gegenüber dem Stand der Technik gesteigerter Funktionalität, verbessertem Komfort, erhöhtem Gebrauchswert und weiter erhöhter Sicherheit bei der Benutzung zu schaffen.

Die vorliegende Erfindung ist in Verbindung mit Kopfstützen gemäß der zuvor zitierten WO 2005/097545 A2 anwendbar, auf deren Offenbarungsgehalt hiermit zur Vermeidung von Wiederholungen vollumfänglich Bezug genommen wird.

Die Aufgabe wird gelöst durch eine Kopfstütze für einen Fahrzeugsitz, insbesondere für einen Kraftfahrzeugsitz, gemäß Anspruch 1.

Es ist hierdurch in einfacher Weise möglich, durch einfache Verstellung des Polsterteils in die vordere Extremalposition eine Einstellbarkeit des Polsterteils dahingehend zu erreichen, dass nicht nur ausgehend von einer weiter hinten liegenden (ersten) (d.h. vom Kopf des Fahrzeuginsassen weiter entfernten) Einstellung des Polsterteils aus eine weitere vorne liegende (zweite) (d.h. dem Kopf des Fahrzeuginsassen näher liegende) Einstellung des Polsterteils möglich ist, sondern dass auch, ausgehend von einer weiter vorne liegenden (zweiten) (d.h. dem Kopf des Fahrzeuginsassen näher liegenden) Einstellung des Polsterteils aus, eine weitere hinten liegende (erste) (d.h. vom Kopf des Fahrzeuginsassen weiter entfernte) Einstellung des Polsterteils, möglichst ohne die Betätigung von Bedienelementen, möglich ist, indem lediglich das Polsterteil in eine (vordere) Extremalposition (und gegebenenfalls nachfolgend zusätzlich auch in eine (hintere) weitere Extremalposition) gebracht wird und anschließend in die gewünschte Einstellposition eingestellt wird.

Erfindungsgemäß ist es vorgesehen, dass die Komfortverstellungseinrichtung ein in einer Verriegelungsstellung und in einer Entriegelungsstellung einstellbares Steuerelement aufweist, wobei bei einer Einstellung des Steuerelements in der Verriegelungsstellung eine direkte Bewegung des Polsterteils von der ersten Position in die zweite Position möglich, eine Bewegung des Polsterteils in die entgegengesetzte Richtung jedoch gesperrt ist und wobei bei einer Einstellung des Steuerelements in der Entriegelungsstellung eine direkte Bewegung des Polsterteils von der ersten Position in die zweite Position und von der zweiten Position in die erste Position möglich ist.

Hierdurch ist erfindungsgemäß mit einfachen Mitteln eine Steuerung der Verriegelung der Positionierung des Polsterteils möglich, ohne dass weitere Bedienelemente betätigt werden müssten.

Erfindungsgemäß ist ferner vorgesehen, dass die Bewegung des Polsterteils zur Komfortverstellung eine Verschwenkbewegung des Polsterteils um eine im Wesentlichen horizontal verlaufende Drehachse ist. Hierdurch ist in einfacher Weise eine Einhandbedienung der Verstellung des Polsterteils möglich.

Ferner ist es erfindungsgemäß bevorzugt, wenn die zur Bewegung des Polsterteils in der Richtung von seiner ersten Position in seine zweite Position benötigte Verstellkraft im Bereich der Extremalposition vergrößert vorgesehen ist. Erfindungsgemäß ist es vorgesehen, dass
das Polsterteil in eine Mehrzahl von Verrastpositionen einstellbar ist, wobei die zur Verstellung in der Richtung von der ersten Position in die zweite Position des Polsterteils benötigte Verstellkraft nach der letzten Verrastposition vor der Extremalposition vergrößert vorgesehen ist.

Es ist hierdurch erfindungsgemäß in vorteilhafter Weise möglich, dass die letzte Verrastposition bzw. Rastposition des Polsterteils vor der Entriegelung sicher und deutlich seitens des Benutzers erkannt wird. Insbesondere ist es dadurch in einfacher Weise vorteilhaft möglich, die letzte Verrastposition vor der Entriegelung (d.h. vor der Extremalposition des Polsterteils) auch bei einer erstmaligen Bedienung der Komfortverstellung sicher einzustellen. Ein weiterer Vorteil besteht darin, dass der Mechanismus der Komfortverstellung des Polsterteils nicht unbeabsichtigt (bzw. unwillkürlich) entriegelt wird. Insbesondere ergibt sich dadurch ein höheres Maß an Komfort sowie ein größeres Maß an Sicherheit, da hiermit eine weniger große Ablenkungswirkung etwa eines Fahrers eines Fahrzeugs vom Verkehrsgeschehen zu erwarten ist.

Gemäß der vorliegenden Erfindung ist es vorgesehen, dass zur Vergrößerung der Verstellkraft eine Blattfeder und/oder eine Spiralfeder und/oder eine Pufferfunktion vorgesehen ist, wobei die Pufferfunktion insbesondere mittels eines Gummimaterials und/oder mittels eines Schaummaterials und/oder mittels eines Lineardämpferelements und/oder mittels eines Rotationsdämpferelements um die Drehachse vorgesehen ist.

Im Folgenden wird eine rein beispielhaft aufzufassende Ausführungsform der Erfindung unter Bezugnahme auf die beigefügte Zeichnung beschrieben.
Figur 1 zeigt schematisch eine Schnittdarstellung durch eine erfindungsgemäße Kopfstütze.
Figur 2 zeigt schematisch zwei Detaildarstellungen einer erfindungsgemäßen Kopfstütze gemäß Figur 1.

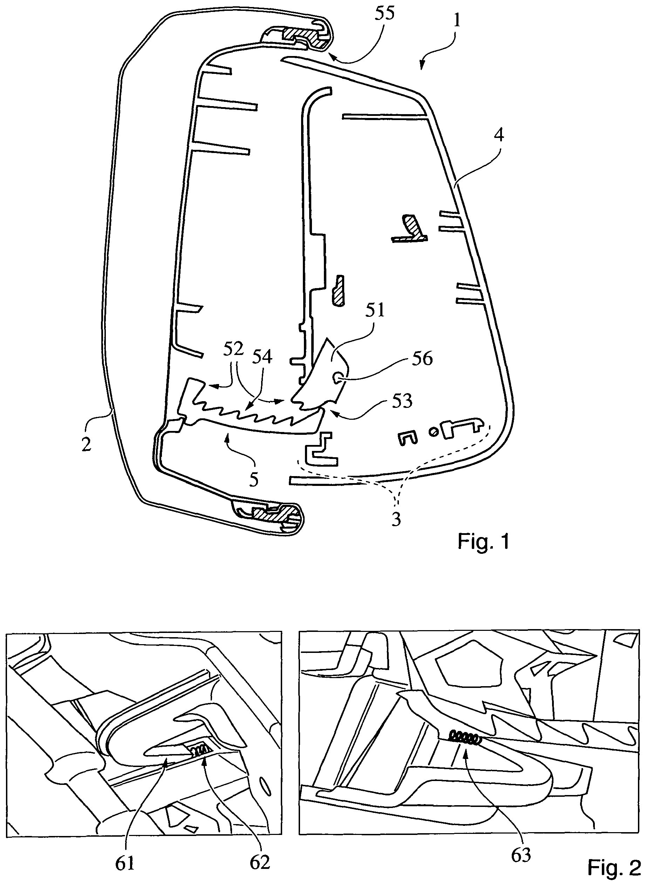

Figur 1 zeigt in einer schematischen Schnittdarstellung eine Kopfstütze 1 mit einem Komfortverstellmechanismus 5 bzw. eine erfindungsgemäß ausgestaltete Kopfstütze 1 für einen Kraftfahrzeugsitz.

Figur 2 zeigt schematisch zwei Detaildarstellungen einer erfindungsgemäßen Kopfstütze 1 und wird im Folgenden gemeinsam mit Figur 1 beschrieben.

Die Kopfstütze 1 weist einen Grundkörper 2 auf, der starr, gegebenenfalls auch höhenverstellbar, über paarige Haltestangen (nicht dargestellt) mit einer (nicht dargestellten) Rückenlehne eines Fahrzeugsitzes verbunden ist. Der Grundkörper 2 ist mit einem Polsterteil 4 verbunden und das Polsterteil 4 ist gegenüber dem Grundkörper 2 nach vorne, auf den Hinterkopf eines Fahrzeuginsassen zu (in der Darstellung gemäß der Figur 1 nach rechts), bzw. nach hinten, vom Hinterkopf des Fahrzeuginsassen weg (in der Darstellung gemäß der Figur 1 nach links), verlagerbar. Das Polsterteil 4 kann eine Sicherheitseinrichtung 3 aufweisen, die eine zusätzliche Verlagerung der Anlagefläche des Polsterteils 4 in Richtung auf den Kopf des Sitzinsassen hin dann durchführt, wenn eine besondere Situation vorliegt, beispielsweise eine Unfallsituation (etwa eine sog. Rückwärtsunfallsituation (engl. rear crash), in der ein zu großer Abstand zwischen der Anlagefläche des Polsterteils 4 und dem Kopf des Sitzinsassen dazu führen kann, dass durch den Aufprall ein sog. Schleudertrauma bewirkt wird, was durch die Sicherheitseinrichtung verhindert werden soll).

Erfindungsgemäß ist es vorgesehen, dass die zu Komfortzwecken durchgeführte Verlagerung des Polsterteils 4 relativ zum Grundkörper 2 mittels einer Drehbewegung bzw. einer Schwenkbewegung um eine Drehachse 55 vorgesehen ist. Hierdurch ist eine besonders einfache und intuitive Bedienung der Komforteinstellmöglichkeit der erfindungsgemäßen Kopfstütze 1 möglich. Erfindungsgemäß ist es vorgesehen, dass die Drehachse 55 in etwa horizontal verläuft, und zwar im oberen Bereich der Kopfstütze bzw. des Grundkörpers 2.

Innerhalb der Kopfstütze 1 ist zwischen dem Polsterteil 4 und dem Grundkörper 2 eine Komfortverstellungseinrichtung 5 vorgesehen. Mit der Komfortverstellungseinrichtung 5 kann das Polsterteil 4 verlagert werden. Die Komfortverstellungseinrichtung 5 weist hierzu ein Steuerelement 51 auf, das in einer Verriegelungsstellung und in einer Entriegelungsstellung einstellbar ist. In der Figur 1 ist das Polsterteil 4 in einer Extremalposition (am weitesten vom Kopf des Sitzinsassen entfernt) dargestellt, und es ist das Steuerelement 51 in seiner Entriegelungsstellung eingestellt dargestellt. Die Komfortverstellungseinrichtung 5 weist im dargestellten Beispiel eine Verrastungsverzahnung 54 auf, die mit dem Steuerelement 51 in Eingriff befindlich ist (nicht in Figur 1 dargestellt), sofern sich das Steuerelement 51 in seiner Verriegelungsstellung befindet, die man sich gegenüber seiner in Figur 1 dargestellten Einstellung um etwa 20° bis 40° (um eine weitere Drehachse 56) nach links gedreht vorzustellen hat.

In der (in Figur 1 dargestellten) Extremalposition des Polsterteils 4 findet eine Verstellung des Steuerelements 51 in seine Entriegelungsstellung durch Berührung (bzw. durch Anschlag gegeneinander) zweier zweiter Anschlagflächen 53 statt. Durch diese Berührung bzw. durch diesen Anschlag bewirken die zweiten Anschlagflächen 53 eine Drehung des Steuerelements 51 nach rechts (um die weitere Drehachse 56), so dass die Entriegelungsstellung des Steuerelements 51 eingestellt ist. In der Entriegelungsstellung des Steuerelements 51 kann das Polsterteil 4 beliebig sowohl in Richtung (in der Regel nach vorne) zum Kopf des Insassen hin als auch in Gegenrichtung, d.h. in der Regel nach hinten, bewegt werden. Erfindungsgemäß kann bevorzugt eine Vorspannung des Polsterteils 4 in die hintere Position vorgesehen sein, etwa mittels einer Vorspannfeder oder eines sonstigen mechanischen oder elektrischen Energiespeichers. Hierdurch wird erfindungsgemäß bevorzugt verhindert, dass sich das Polsterteil in undefinierten Einstellzuständen befindet.

Wird das Polsterteil in eine weitere Extremalposition (ganz hinten) eingestellt, so berühren sich zwei erste Anschlagflächen 52 (bzw. schlagen aneinander an), so dass das Steuerelement 51 (durch Linksdrehung gemäß der Darstellung in Figur 1 um die weitere Drehachse 56) in seine Verriegelungsposition eingestellt wird. In dieser Verriegelungsposition des Steuerelements 51 ist das Steuerelement 51 mit der Verrastungsverzahnung 54 gegenüber einer Bewegung des Polsterteils 4 nach hinten (d.h. vom Kopf des Benutzers weg) verrastet (d.h. es kann nicht in diese Richtung bewegt werden) und gegenüber einer Bewegung des Polsterteils 4 nach vorne (d.h. zum Kopf des Benutzers hin) nicht verrastet (d.h. das Polsterteil 4 kann in inkrementellen Schritten in verschiedene Einstellpositionen eingestellt werden). Erfindungsgemäß wird insbesondere das Steuerelement 51 zusammen mit dem Polsterteil 4 bewegt und die Verrastungsverzahnung 54 ist mit dem Grundkörper 2 verbunden. Alternativ kann es jedoch auch umgekehrt vorgesehen sein.

Erfindungsgemäß ist es bevorzugt, wenn die zur Bewegung des Polsterteils 4 in der Richtung von seiner ersten Position in seine zweite Position benötigte Verstellkraft im Bereich der (vorderen) Extremalposition vergrößert vorgesehen ist. Erfindungsgemäß ist vorgesehen, dass das Polsterteil 4 in eine Mehrzahl von Verrastpositionen einstellbar ist, wobei die zur Verstellung in der Richtung von der ersten Position in die zweite Position des Polsterteils 4 benötigte Verstellkraft nach der letzten (verrastbar einstellbaren) Verrastposition vor der (vorderen) Extremalposition vergrößert vorgesehen ist. Es ist hierdurch erfindungsgemäß vorteilhaft möglich, dass die letzte Verrastposition bzw. Rastposition des Polsterteils vor der Entriegelung sicher und deutlich seitens des Benutzers erkannt wird, so dass die vorderste verrastbare Einstellposition auch bei einer erstmaligen Bedienung der Komfortverstellung sicher erreichbar ist. Zur Herbeiführung einer vergrößerten Verstellkraft im Bereich der Extremalposition ist in den Detaildarstellungen gemäß der Figur 2 ein Gegenanschlag 61 und eine Feder 62 (linke Detaildarstellung gemäß Figur 2) bzw. eine Lagerung 63 einer Feder im Endanschlag (rechte Detaildarstellung gemäß Figur 2) dargestellt. Erfindungsgemäß kann generell zur Vergrößerung der Verstellkraft beispielsweise eine Blattfeder und/oder eine Spiralfeder und/oder eine Pufferfunktion vorgesehen sein, wobei die Pufferfunktion insbesondere mittels eines Gummimaterials und/oder mittels eines Schaummaterials und/oder mittels eines Lineardämpferelements und/oder mittels eines Rotationsdämpferelements um die Drehachse 55 vorgesehen sein kann.

## Patentansprüche

1. Kopfstütze (1) für einen Fahrzeugsitz, insbesondere für einen Kraftfahrzeugsitz, wobei die Kopfstütze (1) ein dem Kopf eines Sitzinsassen zugewandtes Polsterteil (4), einen Grundkörper (2) und eine Komfortverstellungseinrichtung (5) aufweist, wobei in einer Benutzungssituation der Kopfstütze (1) mittels der Komfortverstellungseinrichtung (5) das Polsterteil (4) relativ zu dem Grundkörper (2) von einer ersten und weiter vom Kopf des Sitzinsassen entfernten Position in eine zweite und näher am Kopf des Sitzinsassen vorgesehenen Position einstellbar ist, wobei das Polsterteil (4) mittels der Komfortverstellungseinrichtung (5) auch von der zweiten Position in Richtung zur ersten Position einstellbar ist, wobei dies die Einstellung einer vorderen Extremalposition des Polsterteils (4) erfordert, wobei die Komfortverstellungseinrichtung (5) ein in einer Verriegelungsstellung und in einer Entriegelungsstellung einstellbares Steuerelement (51) aufweist, wobei bei einer Einstellung des Steuerelements (51) in der Verriegelungsstellung eine direkte Bewegung des Polsterteils (4) von der ersten Position in die zweite Position möglich, eine Bewegung des Polsterteils (4) in die entgegengesetzte Richtung jedoch gesperrt ist und wobei bei einer Einstellung des Steuerelements (51) in der Entriegelungsstellung eine direkte Bewegung des Polsterteils (4) von der ersten Position in die zweite Position und von der zweiten Position in die erste Position möglich ist, wobei die Bewegung des Polsterteils (4) zur Komfortverstellung eine Verschwenkbewegung des Polsterteils (4) um eine im Wesentlichen horizontal verlaufende Drehachse (55) ist, wobei die Drehachse (55) im oberen Bereich der Kopfstütze oder des Grundkörpers (2) verläuft, wobei das Polsterteil (4) in eine Mehrzahl von Verrastpositionen einstellbar ist, wobei die zur Verstellung in der Richtung von der ersten Position in die zweite Position des Polsterteils (4) benötigte Verstellkraft nach der letzten Verrastposition vor der Extremalposition vergrößert vorgesehen ist, wobei zur Vergrößerung der Verstellkraft eine Blattfeder und/oder eine Spiralfeder und/oder eine Pufferfunktion vorgesehen ist, wobei die Pufferfunktion insbesondere mittels eines Gummimaterials und/oder mittels eines Schaummaterials und/oder mittels eines Lineardämpferelements und/oder mittels eines Rotationsdämpferelements um die Drehachse (55) vorgesehen ist.

2. Kopfstütze (1) nach Anspruch 1, **dadurch gekennzeichnet, dass** die zur Bewegung des Polsterteils (4) in der Richtung von seiner ersten Position in seine zweite Position benötigte Verstellkraft im Bereich der Extremalposition vergrößert vorgesehen ist.

## Claims

1. Head restraint (1) for a vehicle seat, in particular for a motor vehicle seat, wherein the head restraint (1) has a cushion part (4) facing the head of a seat occupant, a main body (2) and a comfort adjustment device (5), wherein in a usage situation of the head restraint (1) the cushion part (4) may be adjusted relative to the main body (2) from a first position further removed from the head of the seat occupant into a second position provided closer to the head of the seat occupant by means of the comfort adjustment device (5), wherein the cushion part (4) may also be adjusted by means of the comfort adjustment device (5) from the second position in the direction of the first position, wherein this requires the adjustment of a front extreme position of the cushion part (4), wherein the comfort adjustment device (5) has a control element (51) which may be adjusted in a locked position and in an unlocked position, wherein with an adjustment of the control element (51) in the locked position a direct movement of the cushion part (4) is possible from the first position into the second position, a movement of the cushion part (4) being blocked in the opposing direction, however, and wherein with an adjustment of the control element (51) in the unlocked position a direct movement of the cushion part (4) is possible from the first position into the second position and from the second position into the first position, wherein the movement of the cushion part (4) for comfort adjustment is a pivoting movement of the cushion part (4) about a rotational axis (55) extending substantially horizontally, wherein the rotational axis (55) extends in the upper region of the head restraint or of the main body (2), wherein the cushion part (4) may be adjusted into a plurality of latching positions, wherein the adjustment force required for adjustment in the direction from the first position into the second position of the cushion part (4) is provided to be greater after the last latching position before the extreme position, wherein for increasing the adjustment force a leaf spring and/or a spiral spring and/or a buffer function is provided, wherein the buffer function is provided, in particular, by means of a rubber material and/or by means of a foam material and/or by means of a linear damping element and/or by means of a rotational damping element about the rotational axis (55).

2. Head restraint (1) according to Claim 1, **characterized in that** the adjustment force required for moving the cushion part (4) in the direction from its first position into its second position is provided to be greater in the region of the extreme position.

## Revendications

1. Appui-tête (1) pour un siège de véhicule, en particulier pour un siège de véhicule automobile, l'appui-tête (1) présentant une partie de rembourrage (4) tournée vers la tête d'un occupant du siège, un corps de base (2) et un dispositif de réglage de confort (5), la partie de rembourrage (4), dans une situation d'utilisation de l'appui-tête (1), pouvant être ajustée au moyen du dispositif de réglage de confort (5) par rapport au corps de base (2) d'une première position plus éloignée de la tête de l'occupant du siège à une deuxième position prévue plus près de la tête de l'occupant du siège, la partie de rembourrage (4) pouvant être ajustée au moyen du dispositif de réglage de confort (5) également de la deuxième position dans la direction de la première position, ceci exigeant le réglage d'une position avant extrême de la partie de rembourrage (4), le dispositif de réglage de confort (5) présentant un élément de commande (51) pouvant être ajusté dans une position de verrouillage et dans une position de déverrouillage, dans le cas d'un ajustement de l'élément de commande (51) dans la position de verrouillage, un déplacement direct de la partie de rembourrage (4) de la première position à la deuxième position étant possible, mais un déplacement de la partie de rembourrage (4) dans la direction opposée étant bloqué et dans le cas d'un ajustement de l'élément de commande (51) dans la position de déverrouillage, un déplacement direct de la partie de rembourrage (4) de la première position à la deuxième position et de la deuxième position à première position étant possible, le déplacement de la partie de rembourrage (4) pour le réglage de confort étant un déplacement de pivotement de la partie de rembourrage (4) autour d'un axe de rotation (55) s'étendant essentiellement horizontalement, l'axe de rotation (55) s'étendant dans la région supérieure de l'appui-tête ou du corps de base (2), la partie de rembourrage (4) pouvant être ajustée dans une pluralité de positions d'encliquetage, la force de réglage pour le réglage dans la direction de la première position à la deuxième position de la partie de rembourrage (4) étant prévue de manière augmentée après la dernière position d'encliquetage avant la position extrême, pour l'augmentation de la force de réglage, un ressort à lame et/ou un ressort spiral et/ou une fonction d'amortissement étant prévus, la fonction d'amortissement étant prévue notamment au moyen d'un matériau en caoutchouc et/ou au moyen d'un matériau en mousse et/ou au moyen d'un élément d'amortisseur linéaire et/ou au moyen d'un élément d'amortisseur de rotation autour de l'axe de rotation (55).

2. Appui-tête (1) selon la revendication 1, **caractérisé en ce que** la force de réglage nécessaire pour le déplacement de la partie de rembourrage (4) dans la direction de sa première position à sa deuxième position est prévue de manière augmentée dans la région de la position extrême.
